# EUROPÄISCHE PATENTSCHRIFT

(11) **EP 3 840 924 B1**
(45) Veröffentlichungstag und Bekanntmachung des Hinweises auf die Patenterteilung: **08.12.2021**
(21) Anmeldenummer: 18796028.1
(22) Anmeldetag: 31.10.2018
(51) Int. Cl.: B29B 7/60, B29B 7/74, B29B 7/76

(54) **VORRICHTUNG UND VERFAHREN ZUM HERSTELLEN VON REAKTIONSKUNSTSTOFFEN**
DEVICE AND METHOD FOR PRODUCING REACTION PLASTICS
DISPOSITIF ET PROCÉDÉ DE FABRICATION DE MATIÈRES PLASTIQUES RÉACTIVES

(30) Priorität: 07.09.2018 DE 102018121890
(43) Veröffentlichungstag der Anmeldung: 30.06.2021
(73) Patentinhaber: KraussMaffei Technologies GmbH, 80997 München (DE)
(72) Erfinder: BRUNNER, Robert, 86156 Augsburg (DE); NOWAK, Thomas, 81673 München (DE)
(74) Vertreter: Krauss, Philipp
(86) Internationale Anmeldenummer: PCT/EP2018/079807
(87) Internationale Veröffentlichungsnummer: WO 2020/048624

(56) Entgegenhaltungen:
- WO-A1-96/15890
- WO-A1-2014/195312
- DE-A1- 2 914 684
- DE-A1- 3 917 207
- GB-A- 2 488 125
- US-A- 3 765 605
- US-B1- 6 538 040

## Beschreibung

Die vorliegende Erfindung betrifft eine Vorrichtung und ein Verfahren zum Mischen und Herstellen von Reaktionskunststoffen, insbesondere zur Herstellung von Polyurethan-Schäumen aus Isocyanat und mit Flammschutzmittel, wie etwa Blähgraphit, versetztem Polyol.

Bei der Herstellung von Reaktionskunststoffen (bzw. Reaktivkunststoffen) werden üblicher Weise die einzelnen Komponenten des Kunststoffes, d.h. die Reaktivkomponenten, in Verarbeitungsmaschinen von Vorratsbehältern mit Rührwerk über Dosierpumpen oder Kolben zu einem Mischkopf und von dort zurück zum Vorratsbehälter in einem Kreislauf bewegt, um z.B. Sedimentation zu verhindern, eine möglichst konstante Temperatur in der Anlage zu erhalten oder um ein stabiles Druckniveau an den Düsen des Mischkopfs einzustellen.

Vor diesem Hintergrund beschreibt DE 40 03 294 A1 einen Kreislaufblock für Mischköpfe, insbesondere Paralleldüsenköpfe, für eine Polyurethanschäumanlage. DE 10 2016 114 898 A1 betrifft eine Vorrichtung zum Schäumen eines viskosen Materials, wobei das viskose Material mit einer ersten Fördereinrichtung unter einem ersten Förderdruck durch eine erste Förderleitung gefördert wird, und wobei ein Gas unter einem zweiten Förderdruck durch eine zweite Förderleitung gefördert wird, und wobei die zweite Förderleitung an einer Mündungsstelle in die erste Förderleitung einmündet, und wobei stromabwärts der Mündungsstelle eine Ausströmvorrichtung zum druckentlastenden Ausströmen der Mischung aus viskosem Material und Gas vorgesehen ist, wobei an der Mündungsstelle ein Gasinjektionsventil angeordnet ist, wobei das Gasinjektionsventil Gasblasen in das viskose Material injizieren kann.

Ohne den oben beschriebenen Kreislauf zwischen Vorratsbehälter und Mischkopf beschreibt bereits DE 29 14 684 A1 ein Verfahren zum kontinuierlichen Mischen und Dosieren zweier reaktiver viskoser Medien, noch ohne den oben beschriebenen Kreislauf. Auch US 3 765 605 A beschreibt eine entsprechende Vorrichtung, wobei zwei miteinander reagierende Flüssigkeiten, wie die Bestandteile eines Polyurethanschaums, zusammengemischt werden und mittels der Vorrichtung, die die Flüssigkeiten getrennt pumpt und sie erst im letzten Moment mischt, auf ein Substrat ausgestoßen. Durch Umordnen der Pumpen in entgegengesetzter Beziehung und Antreiben durch einen Konstantdruckmotor wie einen doppeltwirkenden Fluidmotor wird ein Ausgleichseffekt erzeugt, der die Druckschwankung effektiv verringert, wenn sich die Hubwirkung umkehrt.

Ein Nachteil hierbei ist, dass zur Eigenschaftsmodifikation des Reaktivsystems beigegebene Feststoffe wie z.B. Flammschutzmittel (insbesondere Blähgraphit), Mikro-Glaskugeln. Aerogele oder dergleichen im dauernden Kreislaufbetrieb im Behälterrührwerk, in den Pumpen und/oder in den Düsen des Mischkopfs immer weiter geschädigt werden. Hierdurch kann eine gleichbleibende Produktqualität nicht mehr gewährleistet werden. Insbesondere können durch Schädigung des Feststoffs durch Zerkleinerung darin eingelagerte Chemikalien freigesetzt werden, die das Reaktivsystem beeinträchtigen. Zudem kann durch einen Kreislaufbetrieb ein zu lang andauernder Verbleib der Feststoffe im System verursacht werden, der zu einer chemischen Reaktion der Feststoffe vor dem eigentlichen Mischen führt.

Aufgabe der Erfindung ist es, die oben beschriebenen Probleme zu lösen. Insbesondere soll eine Vorrichtung und ein Verfahren zum Herstellen von Reaktionskunststoffen angegeben werden, mit denen es möglich ist, unter Zugabe von Feststoffen zu einem Mischungsbestandteil Kunststoffe mit gleichbleibend hoher Qualität zu erzeugen.

Diese Aufgabe wird durch den Gegenstand der unabhängigen Ansprüche gelöst. Vorteilhafte Weiterbildungen sind in den abhängigen Ansprüchen angegeben.

Eine Vorrichtung zum Mischen von Reaktionskunststoffen gemäss Anspruch 1 weist eine erste Dosiervorrichtung mit einer ersten Dosiereinheit und einer zweiten Dosiereinheit auf, die jeweils zum Aufnehmen und dosierten Abgeben einer ersten Mischkomponente geeignet sind. Des Weiteren weist die Vorrichtung eine zweite Dosiervorrichtung, die zum Aufnehmen und dosierten Abgeben einer zweiten Mischkomponente geeignet ist, und eine Mischvorrichtung auf, die zum Empfangen und Mischen der von der ersten Dosiereinheit und/oder der zweiten Dosiereinheit der ersten Dosiervorrichtung abgegebenen ersten Mischkomponente und der von der zweiten Dosiervorrichtung abgegebenen zweiten Mischkomponente geeignet ist. Hierbei sind die erste Dosiereinheit und die zweite Dosiereinheit derart mit der Mischvorrichtung verbunden, dass die erste Mischkomponente vor Beginn des Mischens durch Führen der ersten Mischkomponente von der ersten Dosiereinheit über die Mischvorrichtung zu der zweiten Dosiereinheit auf einen für das Mischen notwendigen Betriebszustand, insbesondere auf einen Betriebsdruck, gebracht werden kann. Dabei ist ein notwendiger Betriebszustand ein Druck, eine Temperatur und/oder eine Viskosität.

Im üblicher Weise verwendeten Kreislaufbetrieb wird vor Beginn des Mischvorgangs die mit einem Feststoff versetzte erste Mischkomponente von einem Vorratsbehälter über eine Dosiervorrichtung zur Mischvorrichtung und zurück zum Vorratsbehälter zirkuliert, bis der gewünschte Betriebszustand der ersten Mischkomponente erreicht ist. Im Gegensatz hierzu wird in der oben beschriebenen Vorrichtung auf einen Kreislaufbetrieb verzichtet.

Stattdessen werden zwei Dosiereinheiten vorgesehen, zwischen denen die erste Mischkomponente geführt wird, bis der gewünschte Betriebszustand erreicht wird. Insbesondere kann ein zur Herstellung von Reaktionskunststoffen benötigter Druck, z.B. im Bereich von 100 bis 200 bar, durch ein Pressen der ersten Mischkomponente von der einen Dosiereinheit in die andere Dosiereinheit in relativ kurzer Zeit, z.B. in wenigen Sekunden, d.h. etwa in 0,5, 1, 1,5 oder 2 Sekunden, erzeugt werden, wobei die Mischvorrichtung, etwa eine an sich bekannte Mischdüse, zwischengelagert ist. Zum Beispiel stellt sich der Verarbeitungsdruck ein, wenn das Reaktivkomponenten-Gemisch durch eine Düse in einem Mischkopf der Mischvorrichtung gefahren wird. Der Druck kann sich bei Erreichen der beabsichtigten Fördermenge einstellen, was, je nach Beschleunigung der Mischkomponenten auf die Mischvorrichtung hin, ca. eine Sekunde dauert. Ist der gewünschte Betriebszustand erreicht, der aufgrund der Führung durch die Mischvorrichtung auch in dieser herrscht, kann mit dem Mischen begonnen werden, ohne dass Ausschuss aufgrund von fehlerhaften Betriebszuständen, wie etwa zu geringem Mischdruck, entsteht.

Die in der einen Dosiereinheit aufgenommene Menge der ersten Mischkomponente wird typischer Weise beim einmaligen Durchgang durch die Mischvorrichtung nicht in ihrer Qualität beeinträchtigt. Sie kann also nachdem mit dem Mischen begonnen wurde, zusammen mit einer sich bereits in der aufnehmenden Dosiereinheit befindlichen Menge der ersten Mischkomponente der Mischvorrichtung zum Mischen zugeführt werden.

Es kann also vollständig auf eine Rückführung von Material in einem Kreislaufbetrieb verzichtet werden. Dies ermöglicht einerseits einen einfachen Aufbau der Vorrichtung, der dennoch das exakte Einstellen von Betriebszuständen der ersten Mischkomponente, wie Druck, Temperatur, Viskosität oder dergleichen erlaubt. Andererseits werden gegebenenfalls in der ersten Mischkomponente enthaltene Feststoffe durch den einmaligen Durchlauf durch die Mischvorrichtung nicht derart geschädigt, dass eine Verminderung der Qualität des durch das Mischen hergestellten Kunststoffes auftritt. Durch Auffangen dieser einmalig durchlaufenden Menge der ersten Mischkomponente in einer Dosiereinheit wird zudem sichergestellt, dass kein Ausschuss an erster Mischkomponente entsteht, sondern dass diese so vollständig wie möglich verarbeitet wird.

Des Weiteren kann die Vorrichtung eine Abgabevorrichtung aufweisen, die einen Vorratsbehälter aufweist und zum selektiven Zuführen der ersten Mischkomponente zu der ersten Dosiereinheit und/oder der zweiten Dosiereinheit geeignet ist. Hierbei kann die erste Mischkomponente, nachdem sie der ersten Dosiereinheit und/oder der zweiten Dosiereinheit zugeführt wurde, in der Mischvorrichtung mit der zweiten Mischkomponente gemischt werden, ohne zurück in die Abgabevorrichtung geführt zu werden. Dies erlaubt es, die beiden Dosiereinheiten in einfacher Weise mit der ersten Mischkomponente zu versorgen. Eine Rückleitung zu einem Vorratsbehälter ist nicht notwendig, wodurch das der ersten Mischkomponente beigegebene Material geschont wird und der Vorrichtungsaufbau vereinfacht wird.

Die Mischvorrichtung kann Steuerungsmittel aufweisen, die geeignet sind, ein Mischen von erster Mischkomponente und zweiter Mischkomponente zu unterbinden und die erste Mischkomponente dabei in einer Leitung von der ersten Dosiereinheit über die Mischvorrichtung zu der zweiten Dosiereinheit zu führen. Zudem können die Steuerungsmittel geeignet sein, ein Mischen von erster Mischkomponente und zweiter Mischkomponente zu ermöglichen und dabei die von der ersten Dosiereinheit über die Mischvorrichtung zu der zweiten Dosiereinheit führende Leitung in der Mischvorrichtung zu unterbrechen.

Hierdurch kann in einfacher Weise das Mischen von erster Mischkomponente und zweiter Mischkomponente gesteuert werden. Es wird insbesondere sichergestellt, dass während des Mischens die erste Mischkomponente vollständig der Mischung zugeführt wird und nicht von einer Dosiereinheit in die andere Dosiereinheit transferiert wird. Dies erlaubt, eine genaue Einstellung des für die Mischung verwendeten Verhältnisses der Mengen von erster und zweiter Mischkomponente.

Die Steuerungsmittel können einen Steuerkolben mit einer Zirkulationsnut aufweisen, der in einer ersten Position einen Eintritt der ersten Mischkomponente und der zweiten Mischkomponente in eine Mischkammer ermöglicht und in einer zweiten Position die erste Mischkomponente über die Zirkulationsnut von der ersten Dosiereinheit zu der zweiten Dosiereinheit führt. Dies gewährleistet bei geschlossenem Steuerkolben einen einfachen und sicheren Transfer der ersten Mischkomponente zwischen den Dosiereinheiten. Durch Öffnen des Steuerkolbens wird diese Leitung unterbrochen und ein Eintritt der ersten Mischkomponente in eine Mischkammer, etwa einer Mischdüse, wird ermöglicht. Dies geschieht dann genau mit den Betriebsparametern, die vor Öffnen des Steuerkolbens eingestellt wurden. Mit dem Öffnen des Steuerkolbens wird dann auch der Zugang der zweiten Mischkomponente in die Mischkammer ermöglicht.

Die erste Dosiereinheit kann einen ersten Behälter aufweisen, die zweite Dosiereinheit kann einen zweiten Behälter aufweisen und die erste Mischkomponente kann vor Beginn des Mischens von dem ersten Behälter in den zweiten Behälter gepresst werden, um den Betriebszustand zu erreichen. Das Vorsehen von für die Zwischenlagerung vorgesehenen Behältern in den Dosiereinheiten ermöglicht ein flexibles und genaues Dosieren der ersten Mischkomponente.

Zum Beispiel kann zu Beginn des Mischverfahrens der erste Behälter vollständig gefüllt sein, während der zweite Behälter nur teilweise gefüllt ist, z.B. zur Hälfte. Vor Beginn des Mischens wird die erste Mischkomponente aus dem ersten Behälter exakt dosiert über die Mischvorrichtung in den zweiten Behälter transferiert. Das der ersten Mischkomponente im zweiten Behälter zur Verfügung stehende Volumen kann dabei zur Einstellung des Betriebszustandes, etwa von Druck oder Temperatur, konstant bleiben oder variiert werden. Nachdem der gewünschte Betriebszustand erreicht ist, wird das Mischen ermöglicht und z.B. ein konstanter Massenstrom von erster Mischkomponente aus dem ersten Behälter in die Mischvorrichtung gefördert. Bei zunehmender Entleerung oder nach der vollständiger Entleerung des ersten Behälters beginnt eine Förderung auch bzw. ausschließlich aus dem zweiten Behälter, ohne das Mengen- bzw. Volumenverhältnis von erster und zweiter Mischkomponente zu verändern.

Dies stellt sicher, dass die einmalig durch die Mischvorrichtung durchtretende Menge an erster Mischkomponente ohne weitere schädigende Beeinträchtigung der Mischung zugeführt werden kann.

Die erste Dosiervorrichtung kann geeignet sein, nach Beginn des Mischens die erste Mischkomponente abwechselnd oder im fliegenden Wechsel durch die erste Dosiereinheit und die zweite Dosiereinheit an die Mischvorrichtung abzugeben. Während eine Förderung von erster Mischkomponente aus der einen Dosiereinheit erfolgt, wird also die andere Dosiereinheit selbst mit der ersten Mischkomponente befüllt. Dies erlaubt es, größere Mengen an Reaktionskunststoff herzustellen, ohne den Mischvorgang zu unterbrechen und ohne eine der Menge an Reaktionskunststoff entsprechende Menge der ersten Mischkomponente in einer der Dosiereinheiten vorzuhalten.

Dadurch können die Dosiereinheiten räumlich kompakt ausgestaltet werden, was einerseits eine flexible Positionierung der Dosiereinheiten erlaubt und andererseits verhindert, dass eine größere Menge der ersten Mischkomponenten über einen längeren Zeitraum in einer der Dosiereinheiten verbleibt, was zu einer Verschlechterung der Qualität der Mischkomponente führen könnte.

Die erste Mischkomponente kann ein mit einem Feststoff, insbesondere Blähgraphit, Mikro-Glaskugeln oder Aerogel, versetztes Polyol, insbesondere Polyesterpolyol oder Polyetherpolyol, aufweisen und die zweite Mischkomponente kann ein Isocyanat aufweisen. Bei einer entsprechenden Bestückung ist die Vorrichtung geeignet, Polyurethan herzustellen, das aufgrund der Feststoffzugabe besondere Eigenschaften aufweist. Zum Beispiel wird durch die Zugabe von Blähgraphit die Herstellung von Polyurethan-Schäumen ermöglicht, die äußerst schwer entflammbar sind und die damit höchsten Brandschutzbestimmungen genügen. Derartige Polyurethan-Schäume können z.B. als Schalldämmteile eingesetzt werden. Zusätzlich zu dem Feststoff können die Mischkomponenten mit verschiedenen weiteren Zusatzstoffen versehen werden. Zum Beispiel kann dem mit Blähgraphit versetztem Polyol noch ein weiteres pulverförmiges Flammschutzmittel beigegeben werden. Es versteht sich von selbst, dass neben Polyol und Isocyanat auch andere Reaktivkomponenten verwendet werden können, die sich für die Herstellung von Reaktivkunststoffen eignen.

Bei der Verwendung einer Mischung aus Polyol mit Blähgraphit als erster Mischkomponente ist die Verwendung der oben beschriebenen Vorrichtung besonders vorteilhaft. Da es sich bei Polyolen um Basen handelt, während Blähgraphit eine Säure darstellt, muss die erste Mischkomponente binnen kurzer Zeit, z.B. innerhalb von ein bis zwei Stunden, verarbeitet werden, um die gewünschten Eigenschaften des Polyurethans garantieren zu können. Eine Vorhaltung in einem üblicher Weise verwendeten Tagesbehälter mit Zirkulation ist hier nicht möglich. Zudem würde eine Abnutzung des Blähgraphits in einem Zirkulationsprozess schnell dazu führen, dass die erwünschten Eigenschaften des herzustellenden Polyurethans nicht mehr garantiert werden können. Gerade die Verwendung von Polyol und Blähgraphit als erster Mischkomponente erfordern also die Verwendung einer Vorrichtung, wie sie oben beschrieben wurde.

Die erste Dosiereinheit und die zweite Dosiereinheit können jeweils einen Dosierkolben mit einem Antrieb per Spindel und Mutter sowie einen Servomotor aufweisen. Dies erlaubt es, die erste Mischkomponente in exakter Dosierung aus den Dosiereinheiten auszubringen. Insbesondere kann auf diese Weise bezüglich der auftretenden Kräfte eine guten Umsetzbarkeit und eine gute Regelbarkeit erreicht werden. Alternativ können die Dosiereinheiten auch mit anderen hierfür geeigneten elektronischen Antrieben oder auch hydraulischen oder pneumatischen Antrieben zum Ausgeben der Mischkomponenten versehen sein.

Die Mischvorrichtung kann eine Zuleitung zum Zuleiten der ersten Mischkomponente in die Mischvorrichtung und eine Ableitung zum Ableiten der ersten Mischkomponente aus der Mischvorrichtung aufweisen. Hierbei kann die erste Dosiereinheit über ein erstes Ventil mit der Zuleitung und über ein zweites Ventil mit der Ableitung verbunden sein und die zweite Dosiereinheit kann über ein drittes Ventil mit der Zuleitung und über ein viertes Ventil mit der Ableitung verbunden sein. Die Ventile können unabhängig voneinander geöffnet und geschlossen werden. Dies erlaubt es, die erste Mischkomponente je nach Bedarf zwischen den beiden Dosiereinheiten und der Mischvorrichtung zu transferieren. Hierdurch wird ein flexibler Betrieb der Vorrichtung gewährleistet.

Ein Volumen der ersten Mischkomponente, das in der ersten Dosiereinheit und/oder der zweiten Dosiereinheit aufgenommen werden kann, kann größer sein, als ein Volumen der ersten Mischkomponente, das durch Leitungen aufgenommen werden kann, die von der ersten Dosiereinheit und/oder der zweiten Dosiereinheit zur Mischvorrichtung führen.

Dadurch wird sichergestellt, dass die Menge der ersten Mischkomponente, die noch nicht der Mischung zugeführt wurde, im Wesentlichen durch die Dimensionierung der Dosiereinheiten bestimmt ist und nicht durch das Volumen der Zwischenleitungen. Dies verhindert, dass trotz richtiger Auslegung der Dosiereinheiten die Qualität des hergestellten Kunststoffes aufgrund einer zu langen Lagerung der ersten Mischkomponente in den Leitungen herabgesetzt ist. Insbesondere können die Dosiereinheiten und die Mischvorrichtung nahe beieinander angeordnet sein, z.B. können sie direkt aneinander geflanscht oder durch kurze Leitungen miteinander verbunden sein.

Die Vorrichtung kann des Weiteren einen Roboterarm aufweisen, auf dem die erste Dosiervorrichtung und die Mischvorrichtung angeordnet sind. Dies erlaubt es, den Reaktionskunststoff in automatisierter Weise herzustellen. Zudem garantiert die Anordnung von erster Dosiervorrichtung und Mischvorrichtung auf dem Roboterarm, dass nur kurze Leitungswege zwischen diesen Elementen liegen. Dies ist insbesondere von Vorteil, wenn flexibel kleinere Formen mit dem Reaktivkunststoff hergestellt werden sollen, z.B. an einem Rundtisch. Wie oben erläutert, trägt dies zur Qualitätssicherung des hergestellten Kunststoffes bei. Alternativ kann die Vorrichtung ohne den Einsatz eines Roboterarmes an einem Doppelband oder dergleichen eingesetzt werden.

Ein Verfahren gemäss Anspruch 11 zum Herstellen von Reaktionskunststoffen mit einer Vorrichtung wie oben beschrieben weist auf: Führen der ersten Mischkomponente von der ersten Dosiereinheit über die Mischvorrichtung zu der zweiten Dosiereinheit, um die erste Mischkomponente auf einen für das Mischen notwendigen Betriebszustand, zu bringen, wobei ein notwendiger Betriebszustand ein Druck, eine Temperatur und/oder eine Viskosität ist; und hierauf Mischen der ersten Mischkomponente und der zweiten Mischkomponente durch die Mischvorrichtung.

Der Fokus der obigen Beschreibung lag auf der ersten Dosiervorrichtung. Die zweite Dosiervorrichtung kann eine an sich bekannte Dosiervorrichtung mit üblichem Zirkulationskreislauf sein. Alternativ kann aber auch die zweite Dosiervorrichtung analog zur ersten Dosiervorrichtung aufgebaut sein.

Im Folgenden werden weitere vorteilhafte Ausgestaltungen der Erfindung unter Bezugnahme auf die Figuren beschrieben. Es zeigt:
Fig. 1 eine schematische Darstellung einer Vorrichtung zur Herstellung von Reaktionskunststoffen;
Fig. 2 eine weitere schematische Darstellung einer Vorrichtung zur Herstellung von Reaktionskunststoffen; und
Fig. 3 eine Darstellung eines schematischen Ablaufdiagrams eines Verfahrens zur Herstellung von Reaktionskunststoffen.

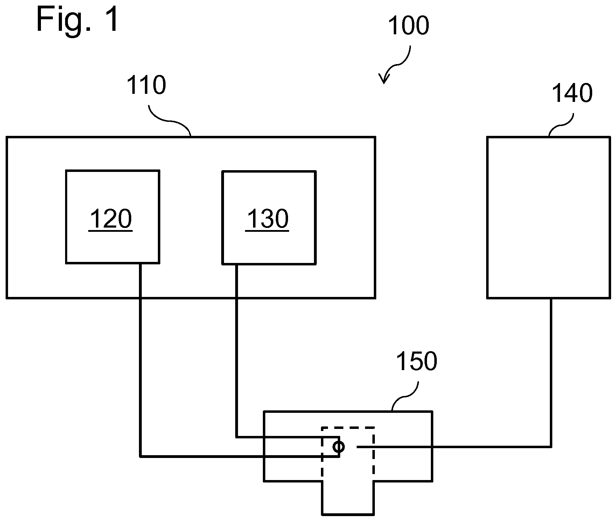

In der Fig. 1 ist schematisch eine Vorrichtung 100 zur Herstellung von Reaktions- bzw. Reaktivkunststoffen durch ein Mischen von Mischkomponenten bzw. Reaktivkomponenten dargestellt. Der Begriff Reaktionskunststoff bezeichnet hierbei Kunststoffe, bei deren Herstellung die chemische Reaktion von zumindest zwei Mischkomponenten beteiligt ist. Die Vorrichtung 100 kann z.B. für die Herstellung von Reaktivkunststoffen, wie etwa Polyurethan(-schäumen) aus Reaktivkomponenten, wie etwa Polyolen, z.B. Polyesterpolyol oder Polyetherpolyol, und Isocyanaten verwendet werden.

Die Vorrichtung 100 weist, wie in der Fig. 1 dargestellt, zumindest zwei Dosiervorrichtungen 110, 140 auf, aus denen jeweilige Mischkomponenten in dosierter Weise über Leitungssysteme an eine Mischvorrichtung 150 abgegeben werden. Obwohl die Vorrichtung im Folgenden mit Bezug auf zwei Dosiervorrichtungen 110, 140 und dementsprechend mit Bezug auf zwei Mischkomponenten beschrieben wird, versteht es sich von selbst, dass auch mehr als zwei Dosiervorrichtungen bzw. Mischkomponenten verwendet werden können.

Die erste Dosiervorrichtung 110 weist zumindest eine erste Dosiereinheit 120 und eine zweite Dosiereinheit 130 auf. Beide Dosiereinheiten 120, 130 sind jeweils dazu geeignet, eine erste Mischkomponente aufzunehmen und über hierfür geeignete Leitungssysteme an die Mischvorrichtung 150 abzugeben bzw. dieser die erste Mischkomponente zuzuführen. Die Benennung als erste und zweite Dosiereinheit dient hierbei nur der klaren Bezeichnung. Die erste Dosiereinheit 120 und die zweite Dosiereinheit 130 können aber vollkommen austauschbar ausgestaltet sein, insbesondere können die beiden Dosiereinheiten 120, 130 baugleich sein. Zudem können auch weitere, z.B. baugleiche oder analog funktionierende Dosierelemente in der ersten Dosiervorrichtung 110 vorgesehen sein.

Die zweite Dosiervorrichtung 140 ist dazu geeignet, eine zweite Mischkomponente aufzunehmen und in dosierter Weise an die Mischvorrichtung 150 abzugeben. Die zweite Dosiervorrichtung 140 kann hierzu wie aus dem Stand der Technik bekannt aufgebaut sein und z.B. als Hochdruck-Dosierpumpe ausgestaltet sein. Die zweite Dosiervorrichtung 140 kann aber im Prinzip auch einen der ersten Dosiervorrichtung 110 entsprechenden Aufbau aufweisen. Dadurch können die später beschriebenen Vorteile des Aufbaus der ersten Dosiervorrichtung 110 auch für den zweiten Dosierstrang genutzt werden.

Im Folgenden wird davon ausgegangen, dass es einem Fachmann entweder aus dem Stand der Technik oder aufgrund der Beschreibung der Ausgestaltung der ersten Dosiervorrichtung 110 bekannt ist, wie die zweite Dosiervorrichtung 140 ausgebildet sein muss, um der Mischvorrichtung 150 eine Mischkomponente eines Reaktionskunststoffes, mit einem bestimmten, vorgegebene Betriebszustand (Druck, Temperatur, Viskosität oder dergleichen) zuführen zu können.

Die prinzipielle Ausgestaltung der Mischvorrichtung 150 ist ebenfalls aus dem Stand der Technik bekannt. Die Mischvorrichtung 150 kann z.B. als Mischdüse ausgebildet sein, in die für einen Mischvorgang die Mischkomponenten mit hohem Druck, z.B. mit 100 bar, 150 bar oder 200 bar, eingeschossen werden. Typischer Weise und wie aus dem Stand der Technik bekannt können die notwendigen Betriebsparameter oder -zustände der beteiligten Mischkomponenten während einer Zirkulation der Mischkomponenten von den (konventionellen) Dosiervorrichtungen, zur Mischdüse und über Vorrats- bzw. Aufbereitungsbehälter der jeweiligen Mischkomponente zurück zu den Dosiervorrichtungen erreicht werden. Sobald die Betriebsparameter erreicht sind, wird die Düse geöffnet und das Mischen der Mischkomponenten erfolgt.

Dieses Verfahren kann jedoch nicht mehr ohne die Gefahr von Qualitätseinbußen verwendet werden, wenn einer der Mischkomponenten für die Erzeugung spezieller Materialeigenschaften notwendige Feststoffe zugegeben werden, da diese im Laufe der Zirkulation verschleißen. Zudem bringt die Zirkulation eine lange Lagerdauer der Mischkomponenten und aufgrund der zur Rückführung nötigen Leitungen eine vergrößerte Komplexität der Leitungsführung mit sich.

Insbesondere bei der Herstellung von schwer entflammbaren Polyurethan-Schäumen, für die z.B. ein Isocyanat mit einem Polyol gemischt wird, das Blähgraphit enthält, ist es notwendig, das Polyol rasch, d.h. binnen ein bis zwei Stunden, einer Verarbeitung zuzuführen. Ansonsten besteht die Gefahr, dass durch vorzeitige chemische Reaktion des sauren Blähgraphits mit dem basischen Polyol die flammhemmenden Eigenschaften des Blähgraphits verloren gehen, d.h. dass die Qualität des erzeugten Polyurethan-Schaumes herabgesetzt wird. Auch eine Schädigung des Blähgraphits in einem Zirkulationsprozess würde den Flammschutz herabsetzen.

Um diese Probleme zu umgehen, wird in der beschriebenen Vorrichtung 100 ein anderes, verbessertes Verfahren zur Einstellung der erwünschten Betriebszustände gewählt, das ohne eine Zirkulation von (zumindest einer) Mischkomponente ausgeführt werden kann. Neben seinen Vorteilen für die Herstellung von schwer entflammbarem Polyurethan ist die Verwendung der beschriebenen Vorrichtung 100 allgemein für die Verarbeitung von Festkörper enthaltenden Mischkomponenten vorteilhaft. Zudem ist durch die verringerte Komplexität der notwendigen Leitungsführung der beschriebene Aufbau auch vorteilhaft, wenn den verwendeten Mischkomponenten keine Festkörper beigemischt werden.

In der Vorrichtung 100 sind die erste Dosiereinheit 120 und die zweite Dosiereinheit 130 derart mit der Mischvorrichtung 150 verbunden, dass vor Beginn des Mischens, d.h. bevor die erste Mischkomponente und die zweite Mischkomponente in Kontakt und aus dem Leitungssystem der Vorrichtung 100 hinaus treten, die erste Mischkomponente von der ersten Dosiereinheit 120 über die Mischvorrichtung 150 in die zweite Dosiereinheit 130 transferiert wird.

Dies erlaubt es, ohne dass ein nennenswerter Anteil der ersten Mischkomponente verloren geht, diese auf die gewünschten Betriebsparameter zu bringen. Solange nämlich kein Mischen erfolgt, kann die erste Mischkomponente von der einen Dosiervorrichtung in die andere Dosiervorrichtung gepresst werden, um hierdurch z.B. einen in der ersten Mischkomponente herrschenden Druck zu erhöhen, wodurch auch die Temperatur und die Viskosität der ersten Mischkomponente eingestellt werden können.

Erst nachdem die gewünschten Parameter erreicht sind, wird mit dem Mischen begonnen. Sobald dies der Fall ist, wird durch entsprechende Ventile, Pumpen oder dergleichen sichergestellt, dass die erste Mischkomponente nicht mehr zwischen den Dosiereinheiten 120, 130 transferiert wird, sondern nurmehr von einer oder beiden Dosiereinheiten 120, 130 der Mischvorrichtung 150 zugeführt wird, z.B. mit einem konstanten Massenstrom. Das Mischen mit der von der zweiten Dosiervorrichtung zugeführten zweiten Mischkomponente erfolgt dann wie aus dem Stand der Technik bekannt.

Hierdurch wird es unnötig, die erste Mischkomponente in der Vorrichtung 100 zirkulieren zu lassen, wodurch sich der Aufbau der Vorrichtung 100 vereinfacht. Zudem durchläuft die erste Mischkomponente die Mischvorrichtung 150 nurmehr einmal, ohne tatsächlich einer Mischung zugeführt zu werden. Hierdurch wird eine Abnutzung von verschleißbaren Feststoffen, wie etwa Blähgraphit, Mikro-Glaskugeln, Aerogelen oder dergleichen verhindert. Dies stellt wiederum eine gleichbleibende Qualität der erzeugten Reaktionskunststoffe sicher.

Auch wird aufgrund des Auffangens der vor dem Mischbetrieb durch die erste Dosiereinheit 120 abgegebenen Menge der ersten Mischkomponente in der zweiten Dosiereinheit 130 sichergestellt, dass diese Menge dem Mischvorgang nicht verloren geht, da sie von der zweiten Dosiereinheit 130 für den Mischvorgang abgegeben werden kann. Dies erlaubt es trotz fehlender Zirkulation, die erste Mischkomponente im Wesentlichen vollständig für die Herstellung von Reaktionskunststoffen zu verwenden.

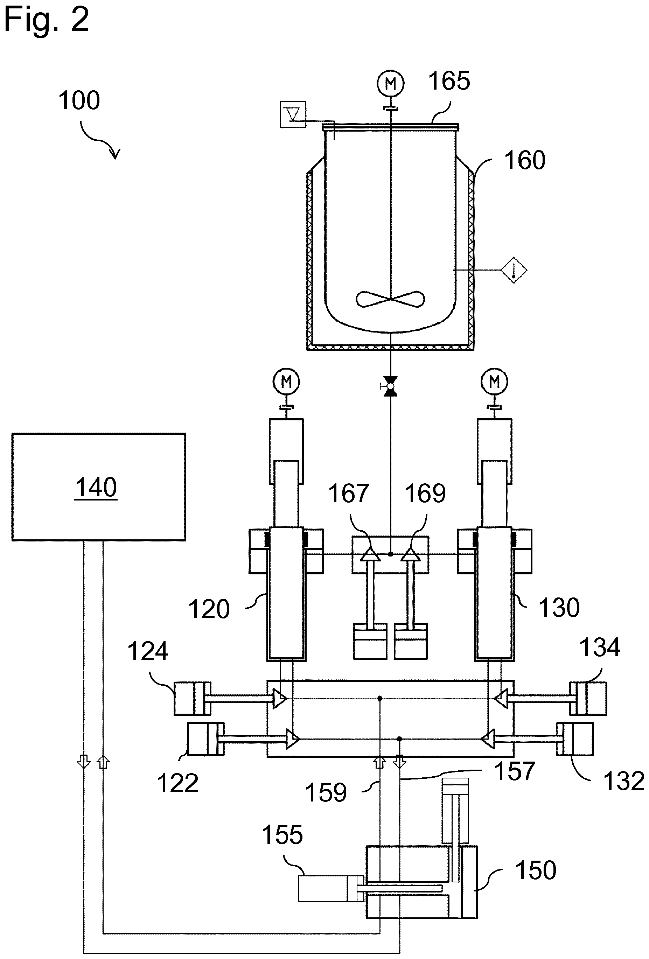

Die Fig. 2 zeigt die Vorrichtung 100 der Fig. 1 in einer möglichen, detaillierteren Ausgestaltung. Neben der ersten Dosiervorrichtung 110 mit der ersten Dosiereinheit 120 und der zweiten Dosiereinheit 130, der zweiten Dosiervorrichtung 140 und der Mischvorrichtung 150 zeigt die Fig. 2 eine Abgabevorrichtung 160, aus der die erste Mischkomponente aus einem Vorratsbehälter 165 an die erste und die zweite Dosiervorrichtung 120, 130 abgegeben werden kann sowie verschieden Leitungen und Ventile der Vorrichtung 100.

Alle oder ein Teil der in der Vorrichtung 100 verwendeten Ventile können hierbei aktiv mittels eines Steuersignals, z.B. elektrisch, pneumatisch oder hydraulisch, geschalten werden.

Im Vorratsbehälter 165 der Abgabevorrichtung 160 der Vorrichtung 100 wird die erste Mischkomponente, z.B. ein Polyol dem ein Feststoff, wie etwa Blähgraphit, zugegeben wurde, für die Abgabe an die erste Dosiereinheit 120 und die zweite Dosiereinheit 130 aufbewahrt. Die erste Mischkomponente wird dabei durch ein Rührwerk in Bewegung gehalten, um eine Sedimentation zu verhindern.

Das Rühren erfolgt hierbei derart, dass keine Schädigung von in der ersten Mischkomponente etwaig enthaltenen Feststoffen auftritt, z.B. durch eine entsprechende Anpassung der Drehzahl des Rührwerks. Das Rührwerk kann hierzu mittels eines frei einstellbaren Servomotors betrieben werden. Es ist aber auch jede andere Art von Rührwerk möglich, die ein entsprechend "sanftes" Rühren gestattet. Zusätzlich zum Rührwerk können in der Abgabevorrichtung 160 noch weitere Sensorelemente vorgesehen sein, die z.B. die Temperatur, die Viskosität oder den Druck der ersten Mischkomponente messen.

Vom Vorratsbehälter 165 kann die erste Mischkomponente über entsprechend ausgestaltete Leitungen selektiv an in der ersten Dosiereinheit 120 und der zweiten Dosiereinheit 130 enthaltene Behälter abgegeben werden. Hierzu können in der Leitung Ventile (fünftes Ventil 167, sechstes Ventil 169) vorgesehen sein, wie in der Fig. 2 gezeigt. Es ist aber auch jede andere Art von Flusskontrolle möglich, die eine selektive, d.h. einzelne oder gemeinsame, Zuteilung der ersten Mischkomponente erlaubt, wie etwa ein Dreiwegeventil.

Die Behälter der ersten und zweiten Dosiereinheit 120, 130 dienen dazu, die erste Mischkomponente vor dem Einbringen in die Mischvorrichtung 150 zu speichern. Die beiden Behälter können hierbei voneinander unabhängige Füllstände aufweisen, die es erlauben, die erste Mischkomponente von einer Dosiereinheit 120 in die andere Dosiereinheit 130 zu transferieren bzw. zu pressen.

Zum Beispiel handelt es sich, wie in der Fig. 2 schematisch dargestellt, bei der ersten und der zweiten Dosiereinheit 120, 130 jeweils um Dosierkolben, bei denen ein per Spindel und Mutter von einem Servomotor geführter Kolben auf die sich in dem durch das Gehäuse des Dosierkolbens gebildeten Behälter befindliche erste Mischkomponente derart einwirkt, dass eine kontrolliert dosierte Abgabe in Richtung der Mischvorrichtung 150 erfolgt. Die Dosiereinheiten 120, 130 können aber auch durch jedes andere zur kurzfristigen Speicherung und dosierten Abgabe geeignetes Bauteil mit jeder anderen Art von Antriebsvorrichtung realisiert werden.

Von den Dosiereinheiten 120, 130 führen Leitungen zur Mischvorrichtung 150, die es erlauben, die erste Mischkomponente über die Mischvorrichtung 150 zwischen den Dosiereinheiten 120, 130 zu transferieren. Wie in der Fig. 2 gezeigt, kann jede der Dosiereinheiten 120, 130 über je eine mit einem Ventil (erstes Ventil 122 und drittes Ventil 132) versehene Leitung mit einer Zuleitung 157 zur Mischvorrichtung verbunden sein. Zudem ist eine Ableitung 159 der Mischvorrichtung 150 über Ventile (zweites Ventil 124 und viertes Ventil 134) jeweils mit der ersten und der zweiten Dosiereinheit 120, 130 verbunden.

Die Leitungsverbindungen zwischen den Dosiereinheiten 120, 130 und der Mischvorrichtung 150 sind hierbei so kurz wie möglich ausgebildet. Zum Beispiel sind diese Elemente direkt aneinander geflanscht oder durch kurze Rohrleitungen miteinander verbunden. Insbesondere sind die Leitungen derart kurz, dass sie weniger Innenvolumen aufweisen als einer oder beide der Behälter der beiden Dosiereinheiten 120, 130. Dies verhindert das ungenutzte Stehen einer gegenüber der in den Dosiereinheiten 120, 130 befindlichen Menge nicht vernachlässigbaren Menge der ersten Mischkomponente in den Leitungen.

Vor Beginn des Mischens sind z.B. das erste Ventil 122 und das vierte Ventil 134 geöffnet und das zweite und dritte Ventile 124, 132 geschlossen. Es besteht also über das erste Ventil 122 eine Verbindung von der ersten Dosiereinheit 120 zur Mischvorrichtung 150 und über das vierte Ventil 134 eine Verbindung von der Mischvorrichtung 150 zur zweiten Dosiereinheit 130.

In der Mischvorrichtung 150 sind Steuerungsmittel vorhanden, die vor Beginn des Mischens einen Übertritt der ersten Mischkomponente von der Zuleitung 157 in die Ableitung 159 erlauben. Wie in der Fig. 2 dargestellt, kann es sich hierbei unter anderem um einen Steuerkolben 155 handeln, in dem eine Zirkulationsnut vorgesehen ist, die bei geschlossenem Steuerkolben 155 die Zuleitung 157 mit der Ableitung 159 verbindet. Alternativ hierzu kann der Übertritt aber auch anders geregelt sein, z.B. durch das Vorsehen von entsprechenden Ventilen in einer Verbindungsleitung der Zuleitung 157 zur Ableitung 159 und zu einer Mischkammer der Mischvorrichtung 150.

Es ist also möglich, vor Beginn eines Mischvorgangs die erste Mischkomponente von der ersten Dosiereinheit 120 über die Mischvorrichtung 150 in die zweite Dosiereinheit zu transferieren. Zum Beispiel kann bei vollständig gefülltem Behälter der ersten Dosiereinheit 120 und teilweise, z.B. halb gefülltem Behälter der zweiten Dosiereinheit 130 damit begonnen werden, die erste Mischkomponente aus der ersten Dosiereinheit 120 zu pressen. Diese wird dann über das erste Ventil 124, die Zirkulationsnut des Steuerkolbens 155 und das vierte Ventil 134 in die zweite Dosiervorrichtung 130 gepresst. Hierdurch kommt die erste Mischkomponente rasch, d.h. innerhalb weniger Sekunden auf den erforderlichen Betriebsdruck von etwa 100 bar bis 200 bar. Der tatsächlich notwendige Betriebsdruck ergibt sich hier aus der Charakteristik der verwendeten Mischvorrichtung 150. Je nach Mischvorrichtung 150 können auch niedrigere oder höhere Drücken für das Mischen verwendet werden.

Ist dieser erreicht, schließt das vierte Ventil 134 und der Steuerkolben 155 wird geöffnet. Dadurch wird zum einen die von der Zuleitung 157 zur Ableitung 159 führende Leitung in der Mischvorrichtung 150 unterbrochen. Zum anderen wird, um ein weiteres Strömen der ersten Mischkomponente in die zweite Dosiereinheit 130 mit zusätzlicher Sicherheit zu unterbinden die Leitung zur zweiten Dosiereinheit 130 durch Schließen des vierten Ventils 134 verhindert.

Bei offenem ersten Ventil 122 und offenem Steuerkolben 155 wird die erste Mischkomponente in bekannter Weise in der Mischvorrichtung 150, z.B. einer an sich bekannten Mischdüse, mit der von der zweiten Mischvorrichtung 140 bereitgestellten zweiten Mischkomponente vermischt und zur Herstellung des Reaktionskunststoffes aus der Mischvorrichtung ausgebracht.

Ist der Behälter der ersten Dosiereinheit 120 leer, wird das erste Ventil 122 geschlossen und das dritte Ventil 132 geöffnet. Die zweite Dosiereinheit 130 übernimmt also die Abgabe der ersten Mischkomponente an die Mischvorrichtung 150 von der ersten Dosiereinheit 120. Der Übergang von erster zu zweiter Dosiereinheit 120, 130 kann hierbei auch geregelt und fließend erfolgen, um z.B. einen konstanten Massenstrom während des gesamten Mischungsvorgangs zu gewährleisten.

Während des gesamten Mischverfahrens kann während Zeiträumen, in denen die erste Mischkomponente nur von einer der beiden Dosiereinheiten 120, 130 abgegeben wird, die jeweils andere Dosiereinheit 120, 130 durch entsprechende Einstellung der zum Vorratsbehälter 165 führenden Ventile 167, 169 neu befüllt werden. Dies ermöglicht es, die beiden Dosiereinheiten 120, 130 im Tandembetrieb zu betreiben, wodurch eine der im Vorratsbehälter 165 befindlichen Menge von erster Mischkomponente entsprechende Menge an Reaktionskunststoff in einem Arbeitsgang hergestellt werden kann.

Ist der Arbeitsgang beendet, kann je nach Füllstand der ersten Mischkomponente in den Dosiereinheiten 120, 130 eine der beiden Dosiereinheiten 120, 130 voll befüllt werden, während die andere nur teilweise befüllt bleibt. Dies ermöglicht es, das oben beschriebene Verfahren zur Einstellung korrekter Betriebsparameter der ersten Mischkomponente vor dem Beginn eines weiteren Misch-/Herstellungsprozesses erneut durchzuführen. Aufgrund des symmetrischen Aufbaus der Vorrichtung ist es hierbei unerheblich, ob die erste Mischkomponente zuerst von der ersten oder der zweiten Dosiervorrichtung 120, 130 abgegeben wird.

Wie oben bereits erläutert, ermöglicht es die beschriebene Vorrichtung, die erste Mischkomponente vollständig für eine Mischung zu verwenden, ohne diese über den Vorratsbehälter zirkulieren lassen zu müssen. Insbesondere kann ohne Zirkulation ein Betriebszustand der ersten Mischkomponente eingestellt werden. Dies erlaubt eine qualitätssichernde Speicherung und Verarbeitung der ersten Mischkomponente und eine strukturelle Vereinfachung der Vorrichtung zur Herstellung von Reaktionskunststoffen.

Die oben beschriebene Vorrichtung eignet sich insbesondere dazu, in der voll- oder halbautomatischen Kunststofffertigung eingesetzt zu werden, z.B. an einem Rundtisch für die flexible Befüllung kleinerer Formen. Hierzu kann die erste Dosiervorrichtung 110 mit den beiden Dosiereinheiten 120, 130 zusammen mit der Mischvorrichtung 150 auf einem Roboterarm angebracht sein. Dies hat den zusätzlichen Vorteil, dass, wie oben beschrieben, die Leitungen zwischen Dosiervorrichtung 110 und Mischvorrichtung 150 kurz sind, was weiter zur Qualitätssicherung beiträgt. Die zweite Dosiervorrichtung 140 kann hierbei in konventioneller Weise aufgebaut sein und der Mischvorrichtung 150 die zweite Mischkomponente im Zirkulationsverfahren von einem neben dem Roboterarm befindlichen Vorratsbehälter zuführen. Alternativ ist auch die zweite Dosiervorrichtung 140 auf dem Roboterarm angebracht.

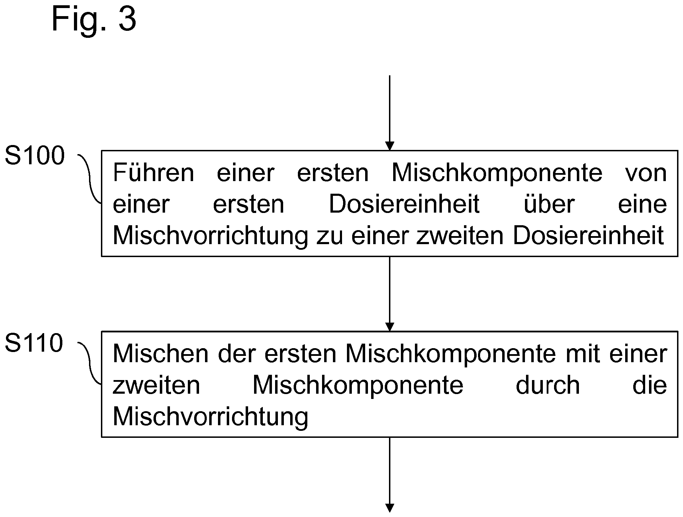

Die Fig. 3 stellt ein schematisches Ablaufdiagram für ein Verfahren zum Herstellen bzw. Mischen eines Reaktionskunststoffes mit einer Vorrichtung dar, wie sie oben beschrieben wurde.

Bei S100 wird eine erste Mischkomponente von der ersten Dosiereinheit über die Mischvorrichtung zu der zweiten Dosiereinheit geführt, um, wie oben beschrieben, die erste Mischkomponente auf einen für das Mischen notwendigen Betriebszustand, insbesondere auf einen Betriebsdruck, zu bringen

Hierauf wird bei S110 die erste Mischkomponente mit einer zweiten Mischkomponente durch die Mischvorrichtung gemischt, wie ebenfalls oben beschrieben wurde.

### Bezugszeichenliste

- 100: Vorrichtung zum Herstellen von Reaktionskunststoffen
- 110: Erste Dosiervorrichtung
- 120: Erste Dosiereinheit
- 122: Erstes Ventil
- 124: Zweites Ventil
- 130: Zweite Dosiereinheit
- 132: Drittes Ventil
- 134: Viertes Ventil
- 140: Zweite Dosiervorrichtung
- 150: Mischvorrichtung
- 155: Steuerungsmittel
- 157: Zuleitung
- 159: Ableitung
- 160: Abgabevorrichtung
- 165: Vorratsbehälter
- 167: Fünftes Ventil
- 169: Sechstes Ventil

## Patentansprüche

1. Vorrichtung (100) zum Herstellen von Reaktionskunststoffen, aufweisend:
eine erste Dosiervorrichtung (110) mit einer ersten Dosiereinheit (120) und einer zweiten Dosiereinheit (130), die jeweils zum Aufnehmen und dosierten Abgeben einer ersten Mischkomponente ausgebildet sind;
eine zweite Dosiervorrichtung (140), die zum Aufnehmen und dosierten Abgeben einer zweiten Mischkomponente ausgebildet ist; und
eine Mischvorrichtung (150), die zum Empfangen und Mischen der von der ersten Dosiereinheit (120) und/oder der zweiten Dosiereinheit (130) der ersten Dosiervorrichtung (110) abgegebenen ersten Mischkomponente und der von der zweiten Dosiervorrichtung (140) abgegebenen zweiten Mischkomponente ausgebildet ist;
**dadurch gekennzeichnet, dass**
die erste Dosiereinheit (120) und die zweite Dosiereinheit (130) derart mit der Mischvorrichtung (150) verbunden sind, dass die erste Mischkomponente vor Beginn des Mischens durch Führen der ersten Mischkomponente von der ersten Dosiereinheit (120) über die Mischvorrichtung (150) zu der zweiten Dosiereinheit (130) auf einen für das Mischen notwendigen Betriebszustand, bringbar ist, wobei ein notwendiger Betriebszustand ein Druck, eine Temperatur und/oder eine Viskosität ist.

2. Vorrichtung (100) gemäß Anspruch 1, des Weiteren mit
einer Abgabevorrichtung (160), die einen Vorratsbehälter (165) aufweist und zum selektiven Zuführen der ersten Mischkomponente zu der ersten Dosiereinheit (120) und/oder der zweiten Dosiereinheit (130) geeignet ist; wobei
die erste Mischkomponente, nachdem sie der ersten Dosiereinheit (120) und/oder der zweiten Dosiereinheit (130) zugeführt wurde, in der Mischvorrichtung (150) mit der zweiten Mischkomponente gemischt wird, ohne zurück in die Abgabevorrichtung (160) geführt zu werden.

3. Vorrichtung (100) gemäß Anspruch 1 oder 2, wobei
die Mischvorrichtung (150) Steuerungsmittel (155) aufweist, die ausgebildet sind, ein Mischen von erster Mischkomponente und zweiter Mischkomponente zu unterbinden und die erste Mischkomponente dabei in einer Leitung von der ersten Dosiereinheit (120) über die Mischvorrichtung (150) zu der zweiten Dosiereinheit (130) zu führen; und
die Steuerungsmittel (155) ausgebildet sind, ein Mischen von erster Mischkomponente und zweiter Mischkomponente zu ermöglichen und dabei die von der ersten Dosiereinheit (120) über die Mischvorrichtung (150) zu der zweiten Dosiereinheit (130) führende Leitung in der Mischvorrichtung (150) zu unterbrechen.

4. Vorrichtung (100) gemäß Anspruch 3, wobei
die Steuerungsmittel (155) einen Steuerkolben mit einer Zirkulationsnut aufweisen;
der Steuerkolben in einer ersten Position einen Eintritt der ersten Mischkomponente und der zweiten Mischkomponente in eine Mischkammer ermöglicht; und
die erste Mischkomponente in einer zweiten Position des Steuerkolbens über die Zirkulationsnut von der ersten Dosiereinheit (120) zu der zweiten Dosiereinheit (130) geführt werden kann.

5. Vorrichtung (100) gemäß einem der vorherigen Ansprüche, wobei
die erste Dosiereinheit (120) einen ersten Behälter aufweist;
die zweite Dosiereinheit (130) einen zweiten Behälter aufweist; und
die erste Mischkomponente vor Beginn des Mischens von dem ersten Behälter in den zweiten Behälter gepresst werden kann, um den Betriebszustand zu erreichen.

6. Vorrichtung (100) gemäß einem der vorherigen Ansprüche, wobei
die erste Dosiervorrichtung (110) geeignet ist, nach Beginn des Mischens die erste Mischkomponente abwechselnd oder im fliegenden Wechsel durch die erste Dosiereinheit (120) und die zweite Dosiereinheit (130) an die Mischvorrichtung abzugeben.

7. Vorrichtung (100) gemäß einem der vorherigen Ansprüche, wobei
die erste Dosiereinheit (120) und die zweite Dosiereinheit (130) jeweils einen Dosierkolben mit einem Antrieb per Spindel und Mutter sowie einen Servomotor aufweisen.

8. Vorrichtung (100) gemäß einem der vorherigen Ansprüche, wobei
die Mischvorrichtung (150) eine Zuleitung (157) zum Zuleiten der ersten Mischkomponente in die Mischvorrichtung (150) und eine Ableitung (159) zum Ableiten der ersten Mischkomponente aus der Mischvorrichtung (150) aufweist;
die erste Dosiereinheit (120) über ein erstes Ventil (122) mit der Zuleitung (157) und über ein zweites Ventil (124) mit der Ableitung (159) verbunden ist;
die zweite Dosiereinheit (130) über ein drittes Ventil (132) mit der Zuleitung (157) und über ein viertes Ventil (134) mit der Ableitung (159) verbunden ist; und
die Ventile (122, 124, 132, 134) unabhängig voneinander geöffnet und geschlossen werden können.

9. Vorrichtung (100) gemäß einem der vorherigen Ansprüche, wobei
ein Volumen der ersten Mischkomponente, das in der ersten Dosiereinheit (120) und/oder der zweiten Dosiereinheit (130) aufgenommen werden kann, größer ist, als ein Volumen der ersten Mischkomponente, das durch Leitungen aufgenommen werden kann, die von der ersten Dosiereinheit (120) und/oder der zweiten Dosiereinheit (130) zur Mischvorrichtung (150) führen.

10. Vorrichtung (100) gemäß einem der vorherigen Ansprüche, des Weiteren aufweisend:
einen Roboterarm, auf dem die erste Dosiervorrichtung (110) und die Mischvorrichtung (150) angeordnet sind.

11. Verfahren zum Herstellen von Reaktionskunststoffen mit einer Vorrichtung gemäß einem der vorherigen Ansprüche,
**gekennzeichnet durch**
Führen der ersten Mischkomponente von der ersten Dosiereinheit (120) über die Mischvorrichtung (150) zu der zweiten Dosiereinheit (130), um die erste Mischkomponente auf einen für das Mischen notwendigen Betriebszustand, wobei ein notwendiger Betriebszustand ein Druck, eine Temperatur und/oder eine Viskosität ist, zu bringen; und hierauf
Mischen der ersten Mischkomponente und der zweiten Mischkomponente mittels der Mischvorrichtung (150).

12. Verfahren gemäß Anspruch 11, wobei
die erste Mischkomponente ein mit einem Feststoff, insbesondere Blähgraphit, Mikro-Glaskugeln oder Aerogel, versetztes Polyol, insbesondere Polyesterpolyol oder Polyetherpolyol, aufweist; und
die zweite Mischkomponente ein Isocyanat aufweist.

## Claims

1. A device (100) for producing reaction plastics, comprising:
a first metering device (110) with a first metering unit (120) and a second metering unit (130), each of which is configured for receiving and dispensing, in a metered manner, a first mixing component;
a second metering device (140) which is configured for receiving and dispensing, in a metered manner, a second mixing component; and
a mixing device (150), which is configured for receiving and mixing the first mixing component dispensed by the first metering unit (120) and/or the second metering unit (130) of the first metering device (110) and the second mixing component dispensed by the second metering device (140);
**characterized in that**
the first metering unit (120) and the second metering unit (130) are connected to the mixing device (150) such that prior to beginning the mixing process, the first mixing component is able to be brought to an operating state required for the mixing process, by guiding the first mixing component from the first metering unit (120) to the second metering unit (130) via the mixing device (150), wherein a required operating state is a pressure, a temperature and/or a viscosity.

2. The device (100) according to Claim 1, furthermore with
a dispensing device (160), which has a storage container (165) and is suitable for the selective feeding of the first mixing component to the first metering unit (120) and/or to the second metering unit (130); wherein
the first mixing component, after it has been fed to the first metering unit (120) and/or to the second metering unit (130), is mixed in the mixing device (150) with the second mixing component, without having to be directed back into the dispensing device (160).

3. The device (100) according to Claim 1 or 2, wherein
the mixing device (150) has control means (155), which are configured to prevent a mixing of first mixing component and second mixing component and, in so doing, to direct the first mixing component in a duct from the first metering unit (120) via the mixing device (150) to the second metering unit (130); and
the control means (155) are configured to enable a mixing of first mixing component and second mixing component and, in so doing, to interrupt the duct leading from the first metering unit (120) via the mixing device (150) to the second metering unit (130), in the mixing device (150).

4. The device (100) according to Claim 3, wherein
the control means (155) have a control piston with a circulation groove;
the control piston, in a first position, enables an entry of the first mixing component and of the second mixing component into a mixing chamber; and
the first mixing component, in a second position of the control piston, can be directed via the circulation groove from the first metering unit (120) to the second metering unit (130).

5. The device (100) according to one of the preceding claims, wherein
the first metering unit (120) has a first container;
the second metering unit (130) has a second container; and
the first mixing component, before the start of the mixing process, can be pressed from the first container into the second container, in order to reach the operating state.

6. The device (100) according to one of the preceding claims, wherein
the first metering device (110) is suitable, after the start of the mixing process, to dispense the first mixing component alternately or on the fly through the first metering unit (120) and the second metering unit (130) to the mixing device.

7. The device (100) according to one of the preceding claims, wherein
the first metering unit (120) and the second metering unit (130) have respectively a metering piston with a drive by spindle and nut and a servomotor.

8. The device (100) according to one of the preceding claims, wherein
the mixing device (150) has a supply line (157) for supplying the first mixing component into the mixing device (150) and a discharge line (159) for discharging the first mixing component out of the mixing device (150);
the first metering unit (120) is connected via a first valve (122) with the supply line (157) and via a second valve (124) with the discharge line (159);
the second metering unit (130) is connected via a third valve (132) with the supply line (157) and via a fourth valve (134) with the discharge line (159); and the valves (122, 124, 132, 134) can be opened and closed independently of one another.

9. The device (100) according to one of the preceding claims, wherein
a volume of the first mixing component which can be received in the first metering unit (120) and/or in the second metering unit (130), is greater than a volume of the first mixing component which can be received through ducts which lead from the first metering unit (120) and/or from the second metering unit (130) to the mixing device (150).

10. The device (100) according to one of the preceding claims, having furthermore:
a robot arm on which the first metering device (110) and the mixing device (150) are arranged.

11. A method for producing reaction plastics with a device according to one of the preceding claims,
**characterized by**
directing the first mixing component from the first metering unit (120) via the mixing device (150) to the second metering unit (130), in order to bring the first mixing component to a required operating state for the mixing process, wherein a required operating state is a pressure, a temperature and/or a viscosity;
and hereafter
mixing the first mixing component and the second mixing component by means of the mixing device (150).

12. The method according to Claim 11, wherein
the first mixing component has a polyol, in particular polyester polyol or polyether polyol, mixed with a solid, in particular expandable graphite, glass microspheres or aerogel; and
the second mixing component has an isocyanate.

## Revendications

1. Dispositif (100) de fabrication de matières plastiques réactives, présentant :
un premier dispositif de dosage (110) avec une première unité de dosage (120) et une seconde unité de dosage (130) qui sont formées chacune pour recevoir et distribuer une première composante de mélange de manière dosée ;
un second dispositif de dosage (140) qui est conçu pour recevoir et distribuer une seconde composante de mélange de manière dosée ; et
un dispositif de mélange (150) qui est conçu pour recevoir et mélanger la première composante de mélange fournie par la première unité de dosage (120) et/ou la seconde unité de dosage (130) du premier dispositif de dosage (110) et la seconde composante de mélange fournie par le second dispositif de dosage (140) ;
**caractérisé en ce que**
la première unité de dosage (120) et la seconde unité de dosage (130) sont ainsi reliées au dispositif de mélange (150) que la première composante de mélange peut être amenée, avant le début du mélange, à un état de fonctionnement indispensable pour le mélange, par l'amenée de la première composante de mélange de la première unité de dosage (120) vers la seconde unité de dosage (130) par le biais du dispositif de mélange (150), dans lequel un état de fonctionnement indispensable est une pression, une température et/ou une viscosité.

2. Dispositif (100) selon la revendication 1, comprenant en outre
un dispositif de distribution (160) qui présente un récipient de réserve (165) et qui est approprié pour l'amenée sélective de la première composante de mélange vers la première unité de dosage (120) et/ou
la seconde unité de dosage (130) ; dans lequel
la première composante de mélange, après qu'elle a été amenée vers la première unité de dosage (120) et/ou la seconde unité de dosage (130), est mélangée à la seconde composante de mélange dans le dispositif de mélange (150), sans être renvoyée dans le dispositif de distribution (160).

3. Dispositif (100) selon la revendication 1 ou 2, dans lequel le dispositif de mélange (150) présente des moyens de commande (155) qui sont conçus pour empêcher un mélange de la première composante de mélange et de la seconde composante de mélange, et pour conduire ainsi la première composante de mélange dans une ligne de la première unité de dosage (120) vers la seconde unité de dosage (130) par le biais du dispositif de mélange (150) ;
les moyens de commande (155) sont conçus pour permettre un mélange de la première composante de mélange et de la seconde composante de mélange, et pour interrompre ainsi la ligne dans le dispositif de mélange (150) conduisant de la première composante de mélange (120) vers la seconde unité de dosage (130) par le biais du dispositif de mélange (150).

4. Dispositif (100) selon la revendication 3, dans lequel les moyens de commande (155) présentent un piston de commande avec une rainure de circulation ;
le piston de commande permet, dans une première position, une entrée de la première composante de mélange et de la seconde composante de mélange dans une chambre de mélange ; et
la première composante de mélange peut être amenée de la première unité de commande (120) à la seconde unité de commande (130) par le biais de la rainure de circulation dans une seconde position du piston de commande.

5. Dispositif (100) selon l'une des revendications précédentes, dans lequel
la première unité de dosage (120) présente un premier récipient ;
la seconde unité de dosage (130) présente un second récipient ; et
la première composante de mélange peut être comprimée du premier récipient dans le second récipient avant le début du mélange pour obtenir l'état de fonctionnement.

6. Dispositif (100) selon l'une des revendications précédentes, dans lequel
le premier dispositif de mélange (110) est approprié, après le début du mélange, pour fournir au dispositif de mélange la première composante de mélange à tour de rôle ou en échange continu, par la première unité de dosage (120) et la seconde unité de dosage (130).

7. Dispositif (100) selon l'une des revendications précédentes, dans lequel
la première unité de dosage (120) et la seconde unité de dosage (130) présentent respectivement un piston de dosage avec un entraînement par broche et écrou ainsi qu'un servo-moteur.

8. Dispositif (100) selon l'une des revendications précédentes, dans lequel
le dispositif de mélange (150) présente une ligne d'arrivée (157) pour amener la première composante de mélange dans le dispositif de mélange (150) et une ligne de sortie (159) pour évacuer la première composante de mélange hors du dispositif de mélange (150) ;
la première unité de dosage (120) est reliée à la ligne d'arrivée (157) par un premier clapet (122) et à la ligne de sortie (159) par un deuxième clapet (124) ;
la seconde unité de dosage (130) est reliée à la ligne d'arrivée (157) par un troisième clapet (132) et à la ligne de sortie (159) par un quatrième clapet (134) ;
les clapets (122, 124, 132, 134) peuvent être ouverts et fermés indépendamment l'un de l'autre.

9. Dispositif (100) selon l'une des revendications précédentes, dans lequel
un volume de la première composante de mélange qui peut être reçu dans la première unité de dosage (120) et/ou la seconde unité de dosage (130), est plus grand qu'un volume de la première composante de mélange qui peut être reçu par des lignes qui vont de la première unité de dosage (120) et/ou de la seconde unité de dosage (130) vers le dispositif de mélange (150).

10. Dispositif (100) selon l'une des revendications précédentes, présentant en outre :
un bras de robot sur lequel sont disposés le premier dispositif de dosage (110) et le dispositif de mélange (150) .

11. Procédé de fabrication de matières plastiques réactives comprenant un dispositif selon l'une des revendications précédentes,
**caractérisé par**
l'amenée de la première composante de mélange de la première unité de dosage (120) à la seconde unité de dosage (130) par le biais du dispositif de mélange (150), pour amener la première composante de mélange à un état de fonctionnement indispensable pour le mélange, dans lequel un état de fonctionnement indispensable est une pression, une température et/ou une viscosité ; et là-dessus
le mélange de la première composante de mélange et de la seconde composante de mélange au moyen du dispositif de mélange (150).

12. Procédé selon la revendication 11, dans lequel
la première composante de mélange présente un polyol, en particulier du polyester polyol ou du polyéther polyol mélangé à une substance solide, en particulier du graphite expansible, des micro-billes de verre ou de l'aérogel ;
la seconde composante de mélange présente un isocyanate.
